# FASCICULE DE BREVET EUROPEEN

(11) **EP 2 058 229 B1**
(45) Date de publication et mention de la délivrance du brevet: **19.04.2017**
(21) Numéro de dépôt: 08168682.6
(22) Date de dépôt: 07.11.2008
(51) Int. Cl.: B64D 27/26

(54) **MOYEN DE BLOCAGE EN ROTATION D'UN AXE SUPPORTANT UN ORGANE DE SUSPENSION DE TURBOMOTEUR**
BLOCKIERMITTEL DER DREHBEWEGUNG EINER ACHSE, DIE EINE AUFHÄNGUNG FÜR EIN TURBINENTRIEBWERK TRÄGT
MEANS OF BLOCKING THE ROTATION OF AN AXLE SUPPORTING A TURBOSHAFT ENGINE SUSPENSION MEMBER

(30) Priorité: 09.11.2007 FR 0707882
(43) Date de publication de la demande: 13.05.2009
(73) Titulaire: Safran Aircraft Engines, 75015 Paris (FR)
(72) Inventeur: Renon, Olivier, 77540 Courpalay (FR); Rodrigues, Paul, 91600 Savigny sur Orge (FR); Schnell, Christian René, 77130 Forges (FR); Soupizon, Jean-Luc, 77530 Vaux le Penil (FR)
(74) Mandataire: Gevers & Orès

(56) Documents cités:
- EP-A- 0 357 504
- WO-A-85/02596

## Description

La présente invention concerne le montage d'un organe de suspension de turbomoteur tel qu'un turboréacteur. Elle concerne en particulier le montage d'un organe de suspension comprenant un moyen visant à bloquer en rotation l'axe de suspension afin d'éviter les problèmes résultant de vibrations et d'usures sur l'axe.

Un moteur de propulsion, tel qu'un turboréacteur, peut être monté à divers endroits de l'avion en étant accroché à un mât appartenant à la structure de ce dernier. Il peut être suspendu sous les ailes, fixé au fuselage ou monté dans l'empennage par des moyens d'accrochage. Ces moyens d'accrochage ont pour fonction d'assurer la transmission des efforts mécaniques entre le moteur et la structure du turboréacteur. Les charges à prendre en considération sont orientées selon les trois directions principales. Ce sont notamment le poids du moteur, sa poussée, et les charges aérodynamiques latérales. Les charges à transmettre comprennent aussi la reprise du couple de rotation autour de l'axe du moteur. Ces moyens doivent en outre absorber les déformations subies par le moteur pendant les différentes phases du vol en raison notamment des variations dimensionnelles dues aux dilatations ou contractions thermiques.

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter intermédiaire en aval du carter de la soufflante et la suspension arrière au carter d'échappement du flux primaire.

Selon une configuration connue, la suspension avant est agencée pour assurer la transmission des efforts mécaniques verticaux et tangentiels entre le moteur et l'avion. La suspension arrière est agencée pour assurer le passage des efforts mécaniques suivant ces mêmes directions, ainsi que la reprise du couple moteur autour de l'axe du turboréacteur et la reprise de poussée. Cette dernière est transmise par l'intermédiaire de deux barres de reprise de poussée accrochées, à l'avant, à la base du carter intermédiaire de part et d'autre de l'axe longitudinal, et, à l'arrière, au moyen de suspension arrière du moteur.

Généralement un moyen de suspension comprend une poutre, éventuellement double, fixée au mât par des boulons et reliée au carter du moteur par des biellettes. Les biellettes tourillonnent à leurs extrémités sur des chapes ou pattes, selon le montage, solidaires respectivement du carter et de la poutre. Afin que la transmission des efforts par les biellettes soit purement axiale, on prévoit un palier à rotule pour les axes traversant, à chaque extrémité de ces dernières. Ce montage permet notamment d'absorber les dilatations radiales et axiales du moteur.

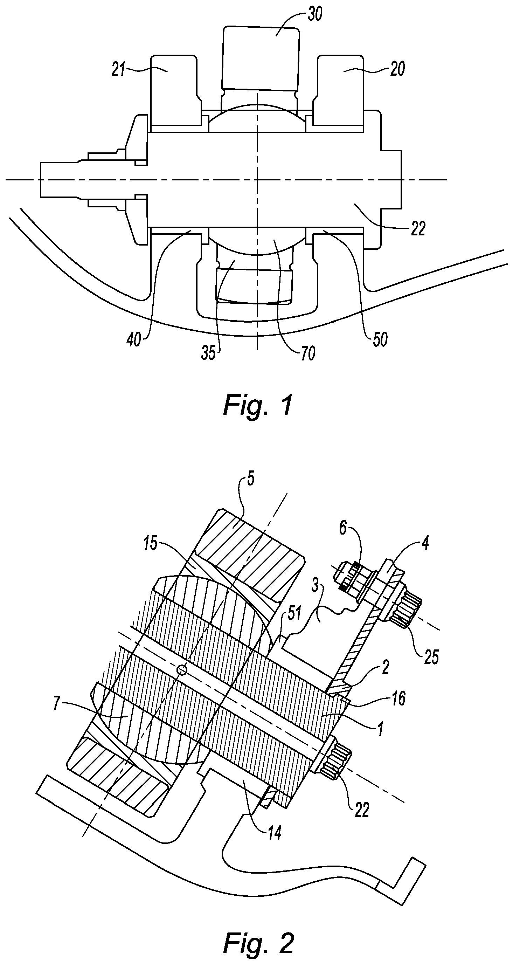

Tel que représenté sur la figure 1, une biellette 30 est fixée sur les oreilles 20 et 21 d'une chape de carter par l'intermédiaire d'un axe épaulé 22, fixé par deux douilles 40 et 50 sur les deux oreilles, traversant la tête de la biellette. La biellette 30 comprend un alésage au sein duquel est fixée, par sertissage, une cage 35 de surface intérieure sphérique. Cette dernière sert de guide à une bague 70 à surface extérieure sphérique, fixée sur l'axe, formant ainsi une liaison rotule. Il existe un jeu entre les douilles et la rotule 70. La rotule peut se déplacer axialement sur l'axe. Ledit axe est maintenu par un écrou et une rondelle avec un jeu entre la rondelle et l'oreille de la chape

Grâce à ce montage avec rotule, la tête de biellette peut pivoter non seulement autour de l'axe mais aussi autour de tout axe qui lui est perpendiculaire dans les limites des butées définies par l'environnement. Le mouvement est limité notamment en fonction de l'intervalle, ménagé de part et d'autre, entre la tête de biellette et les oreilles de la chape. Un exemple de réalisation d'un dispositif de suspension d'une biellette est donné par la demande de brevet EP 0 357 504.

Au cours de la vie du moteur, l'axe de liaison est soumis à des micro-déplacements dus à des efforts de vibration, en particulier à des sollicitations orientées parallèlement à l'axe, en raison notamment de la faible inclinaison des biellettes par rapport au carter Dans la durée, la répétition de ces sollicitations provoquent des usures dues aux frottements sur l'axe et les douilles. De plus, le changement de diamètre du carter, par dilatation, associé à une charge répartie sur les biellettes peut provoquer la rotation de l'axe autour de son support.

Le déposant s'est fixé comme objectif de réaliser le montage d'un organe de suspension sur des chapes de carter d'un turbomoteur qui permet d'éviter les problèmes d'usure dues au frottement des oreilles, des douilles et des axes de suspension en bloquant en rotation ledit axe de suspension.

Conformément à l'invention le dispositif de montage d'un organe de suspension sur le carter d'un turbomoteur comprenant une chape avec au moins une oreille, pour être solidaire du carter, un axe fixé sur ladite chape pour supporter ledit organe par l'intermédiaire d'une bague entourant l'axe, ledit dispositif comportant un moyen de blocage en rotation comprenant une plaquette anti-rotation rapportée sur l'oreille, est caractérisé par le fait que ladite plaquette et l'axe comportent un ensemble constitué d'un pion et d'une encoche ou d'un perçage, dans le ou laquelle vient s'engager ledit pion, afin d'assurer un blocage en rotation de l'axe dans la chape.

Un avantage de l'invention est de parvenir, avec un moyen simple, à éviter les problèmes dus au changement de diamètre du carter par dilatation, associée à une charge répartie sur les biellettes. Ce montage présente aussi l'avantage de limiter les vibrations.

Selon une autre caractéristique, la plaquette est bloquée en rotation par rapport à la chape par une liaison boulonnée constituée d'une vis, traversant la plaquette et l'oreille, maintenue par un écrou.

La présente invention concerne un carter de turbomoteur comprenant au moins une chape avec au moins une oreille comportant au moins un dispositif de montage d'un organe de suspension tel que présenté ci-dessus. La présente invention concerne également un turbomoteur comportant au moins un dispositif de montage d'un organe de suspension tel que présenté ci-dessus.

On comprendra mieux les buts, aspects et avantages de la présente invention, après la description donnée ci-après des différents modes de réalisation, présentés à titre d'exemples non limitatifs, en se référant aux dessins annexés, dans lesquels:
La figure 1 représente le montage d'un organe de suspension sur une chape conformément à l'art antérieur,
La figure 2 représente un dispositif de montage d'un organe de suspension,
La figure 3 représente le dispositif de la figure 2 en vue de côté.

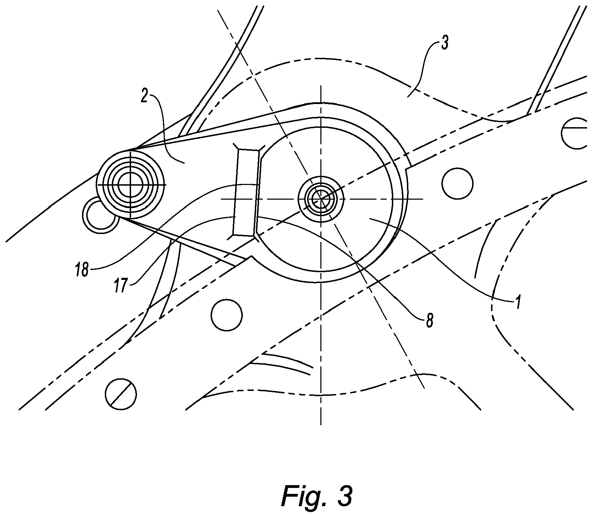

On décrit plus en détail le dispositif en se reportant aux figures 2 et 3, sur lesquelles on voit une chape 3 solidaire d'un carter et comportant deux oreilles. On ne voit qu'une seule oreille 4 ; elle est percée d'un alésage qui est traversé par un axe 1 supportant une biellette 5 par l'intermédiaire d'une liaison à rotule. L'axe 1 traverse la biellette 5 ainsi que l'oreille 4 de la chape.

La biellette 5 comprend elle-même un alésage au sein duquel est fixée, par sertissage, une cage 15 de surface intérieure sphérique. La surface interne de la cage 15 sert de guide à une bague 7 de surface extérieure sphérique, fixée sur l'axe 1, en son centre, formant une liaison à rotule. La bague 7 entoure l'axe 1, la liaison à rotule permet à la biellette 5 de pivoter non seulement autour de l'axe 1 mais aussi autour de tout axe qui lui est perpendiculaire et passant par le centre de la rotule.

L'axe 1 est monté dans l'alésage de l'oreille 4 de la chape 3 par l'intermédiaire d'une douille 14. La douille 14 est de forme cylindrique avec un épaulement 51 en son extrémité qui permet de la maintenir en butée sur l'oreille 4. Dans ce mode de réalisation, l'axe 1 est serré sur la chape afin de limiter au maximum les usures dues au frottement de l'axe sur la chape 3.

Une vis 22 (figure 2), qui est maintenue par un écrou, non représenté sur les figures, traverse l'axe 1 longitudinalement en son milieu.

L'axe 1 de forme cylindrique comporte, en son extrémité, un épaulement 16, sur lequel une surface plane est réalisée constituant ainsi un méplat 8 (représenté sur la figure 3). Ledit épaulement 16 vient en appui sur une plaquette 2, elle même en appui sur l'oreille 4 de la chape 3.

La plaquette 2 (figure 2 et 3) comporte un plot anti-rotation 17 (figure 3) de forme rectangulaire formant ainsi une surface 18 sur laquelle vient en butée le méplat 8 de l'axe 1. Ainsi, la plaquette 2, par l'intermédiaire du plot 17, empêche la rotation de l'axe 1.

Une vis 25 traverse la plaquette 2 et l'oreille 4 de la chape 3. Elle est maintenue par un écrou 6, constituant ainsi une liaison boulonnée entre ladite plaquette et l'oreille 4. Ainsi, par l'intermédiaire de ladite liaison boulonnée, la plaquette 2 est bloquée en rotation par rapport à la chape 3.

La solution permet de maintenir l'axe 1 immobile par rapport à la chape malgré les vibrations auxquelles il est soumis pendant le fonctionnement du moteur.

Ces modes de réalisations ne sont pas limités, ainsi, dans d'autres modes de réalisations de l'invention, non représentés sur les figures, la liaison boulonnée réalisée par la vis 25 et l'écrou 6 (figure 2), bloquant en rotation la plaquette 2 par rapport à la chape 3, pourra être remplacée par un pion solidaire, soit de la chape 3, soit de la plaquette 2.

Selon l'invention, et non représenté dans les figures, le plot anti-rotation 17 est remplacé par un pion solidaire avec la plaquette 2. Dans ce cas, un perçage ou une encoche, au niveau de l'épaulement 16 de l'axe 1, sert de fixation au dit pion. Dans ce système, le pion de la plaquette 2 entre dans le perçage de l'axe 1 permettant ainsi de le bloquer en rotation. Dans ce mode de réalisation l'axe 1 n'est pas serré axialement sur la chape 3.

## Revendications

1. Dispositif de montage d'un organe de suspension sur le carter d'un turbomoteur comprenant une chape (3) avec au moins une oreille (4), pour être solidaire du carter, un axe (1) fixé sur ladite chape (3) pour supporter ledit organe par l'intermédiaire d'une bague (7) entourant l'axe (1), ledit dispositif comportant un moyen de blocage en rotation comprenant une plaquette anti-rotation (2) rapportée sur l'oreille **caractérisé par le fait que** ladite plaquette (2) et l'axe (1) comportent un ensemble constitué d'un pion et d'une encoche ou d'un perçage, dans le ou laquelle vient s'engager ledit pion, afin d'assurer un blocage en rotation de l'axe (1) dans la chape (3).

2. Dispositif selon la revendication 1, dont la plaquette (2) est bloquée en rotation par rapport à la chape (3) par une liaison boulonnée.

3. Dispositif selon la revendication 2, dont la liaison boulonnée est constituée d'une vis (25), traversant la plaquette (2) et l'oreille (4), maintenue par un écrou (6).

4. Carter de turbomoteur comprenant au moins une chape (3) avec au moins une oreille (4) comportant au moins un dispositif de montage d'un organe de suspension selon l'une des revendications 1 à 3.

5. Turbomoteur comportant au moins un dispositif de montage d'un organe de suspension selon l'une des revendications 1 à 3.

## Patentansprüche

1. Vorrichtung zur Montage eines Aufhängungsorgans an dem Gehäuse eines Triebwerks, umfassend einen Gabelkopf (3) mit mindestens einem Ohr (4), um mit dem Gehäuse fest verbunden zu sein, eine Achse (1), die an dem Gabelkopf (3) befestigt ist, um das Organ durch einen Ring (7) zu tragen, der die Achse (1) umgibt, wobei die Vorrichtung ein Drehblockiermittel aufweist, das eine Antirotationsplatte (2) aufweist, die an dem Ohr angebracht ist, **dadurch gekennzeichnet, dass** die Platte (2) und die Achse (1) eine Anordnung aufweisen, die aus einem Stift und aus einer Kerbe oder einer Bohrung gebildet ist, in die der Stift eingreift, um ein Blockieren in Drehung der Achse (1) in dem Gabelkopf (3) zu gewährleisten.

2. Vorrichtung nach Anspruch 1, wobei die Platte (2) in Bezug auf den Gabelkopf (3) durch eine Schraubverbindung in Drehung blockiert ist.

3. Vorrichtung nach Anspruch 2, wobei die Schraubverbindung aus einer Schraube (25), die die Platte (2) und das Ohr (4) durchquert, die durch eine Mutter (6) gehalten ist, gebildet ist.

4. Triebwerkgehäuse, das mindestens einen Gabelkopf (3) mit mindestens einem Ohr (4) aufweist, umfassend mindestens eine Vorrichtung zur Montage eines Aufhängungsorgans nach einem der Ansprüche 1 bis 3.

5. Triebwerk, umfassend mindestens eine Vorrichtung zur Montage eines Aufhängungsorgans nach einem der Ansprüche 1 bis 3.

## Claims

1. A device for mounting a suspension member on the casing of a turbine engine comprising a yoke (3) with at least one lug (4), to be secured to the casing, a pin (1) fixed to said yoke (3) to support said member via a ring (7) surrounding the pin (1), said device comprising a rotation-prevention means comprising a counter-rotation plate (2) attached to the lug, **characterized in that** said plate (2) and the pin (1) comprise an assembly consisting of a peg and of a cutout or a hole, into which said peg fits in order to prevent the pin (1) from rotating in the yoke (3).

2. The device as claimed in claim 1, in which the plate (2) is prevented from rotating relative to the yoke (3) by a bolted connection.

3. The device as claimed in claim 2, in which the bolted connection consists of a screw (25) passing through the plate (2) and the lug (4) and held in place by a nut (6).

4. A turbine engine casing comprising at least one yoke (3) with at least one lug (4) comprising at least one device for mounting a suspension member as claimed in one of claims 1 to 3.

5. A turbine engine comprising at least one device for mounting a suspension member as claimed in one of claims 1 to 3.
